# EUROPÄISCHE PATENTANMELDUNG

(11) **EP 4 699 688 A1**
(43) Veröffentlichungstag der Anmeldung: **25.02.2026**
(21) Anmeldenummer: 24195204.3
(22) Anmeldetag: 19.08.2024
(51) Int. Cl.: B01D 63/02, H01M 8/04119

(54) **BEFEUCHTER FÜR EINE BRENNSTOFFZELLE**

(71) Anmelder: Carl Freudenberg KG, 69469 Weinheim (DE); Joma-Polytec GmbH, 72411 Bodelshausen (DE)
(72) Erfinder: Beisel, Tobias, 69483 Wald-Michelbach (DE); Dr. Hücker, Verena, 69469 Weinheim (DE); Herberg, Felix, 64646 Heppenheim (DE); Vollmer, Oliver, 72108 Rottenburg (DE); Bulach, Sven, 72379 Hechingen (DE); Heinz, Stefan, 742411 Bodelshausen (DE)
(74) Vertreter: Reiser & Partner Patentanwälte mbB

(57) **Zusammenfassung**

Befeuchter (1) für eine Brennstoffzelle, umfassend ein Gehäuse (3) mit einer ersten Eintrittsöffnung (4), einer zweiten Eintrittsöffnung (5), einer ersten Austrittsöffnung (6) und einer zweiten Austrittsöffnung (7), wobei der zweiten Eintrittsöffnung (5) ein Kanal (8) zugeordnet ist, wobei zwischen dem Kanal (8) und der zweiten Austrittsöffnung (7) ein Membranelement (9) angeordnet ist, wobei der Kanal (8) mit einer dritten Austrittsöffnung (10) strömungsleitend verbunden ist.

## Beschreibung

Die Erfindung betrifft einen Befeuchter für eine Brennstoffzelle, umfassend ein Gehäuse mit einer ersten Eintrittsöffnung, einer zweiten Eintrittsöffnung, einer ersten Austrittsöffnung und einer zweiten Austrittsöffnung, wobei der zweiten Eintrittsöffnung ein Kanal zugeordnet ist, wobei zwischen dem Kanal und der zweiten Austrittsöffnung ein Membranelement angeordnet ist.

### Stand der Technik

Befeuchter finden insbesondere in PEM-Brennstoffzellen Verwendung und befeuchten die Brennstoffzellenzuluft, um ein Austrocknen der Brennstoffzellen-Membranen zu verhindern. Zum Befeuchten kann die mit Feuchtigkeit in Form von Wasserdampf beladene Brennstoffzellenabluft herangezogen werden. Der Befeuchter ermöglicht die Übertragung der Feuchtigkeit von der Brennstoffzellenabluft zur Brennstoffzellenzuluft.

Aus der DE 10 2016 004 850 A1 ist ein Befeuchter der eingangs genannten Art bekannt. Das Membranelement des aus dem Stand der Technik bekannten Befeuchters umfasst Hohlfasern, die den Kanal konzentrisch umgeben, wobei die Hohlfasern in Längsrichtung des Kanals ausgerichtet und um den Kanal herum angeordnet sind. Die zu befeuchtende Brennstoffzellenzuluft strömt über die erste Eintrittsöffnung stirnseitig in die Hohlfasern ein und durchströmt die Hohlfasern innenseitig. Die die Feuchtigkeit tragende Brennstoffzellenabluft, auch als Befeuchterluft bezeichnet, strömt über die zweite Eintrittsöffnung in den Kanal ein. Der Kanal ist entlang der Umfangswand perforiert, sodass die Befeuchterluft den Kanal in radialer Richtung verlassen kann und das Membranelement in radialer Richtung durchströmt, wobei die Befeuchterluft außenseitig an den Hohlfasern entlangströmt. Die Umfangswand der Hohlfasern fungiert als semipermeable Membran, welche ausgerüstet ist, nur Feuchtigkeit zu übertragen und einen Gasaustausch, insbesondere Austausch von Sauerstoff zu unterbinden. Während des Durchströmens der Befeuchterluft durch das Membranelement erfolgt dementsprechend ein Transfer der Feuchtigkeit von der Befeuchterluft zu der durch die Hohlfasern strömende Brennstoffzellenzuluft. Das Membranelement wird im Kreuzstromprinzip umströmt. Die befeuchtete Brennstoffzellenzuluft wird anschließend gesammelt und verlässt den Befeuchter über die erste Austrittsöffnung.

Bei dem aus dem Stand der Technik bekannten Befeuchter endet der Kanal innerhalb des Membranelementes und der Kanal ist an einer Stirnseite verschlossen. Dadurch ist es erforderlich, dass die gesamte Befeuchterluft stets über die über den Umfang verteilten Öffnungen des Kanals ausströmt und vollständig das Membranelement durchströmt.

Insbesondere bei mobilen Anwendungen ist es erforderlich, die Brennstoffzelle dynamisch zu betreiben, woraus sich wiederum die Notwendigkeit einer variablen Befeuchtungsrate der Brennstoffzellenzuluft ergeben kann. Hierzu ist es bekannt, einen Bypass vorzusehen, durch welchen ein Teilvolumen der Befeuchterluft um den Befeuchter herumgeleitet werden kann. Ein derartiger gesonderter Bypass erfordert jedoch zusätzlichen Bauraum und es können sich zusätzliche Druckverluste ergeben.

### Darstellung der Erfindung

Der Erfindung liegt die Aufgabe zugrunde, einen Befeuchter für eine Brennstoffzelle bereitzustellen, der mit einfachen Mitteln eine variable Anpassung der Beladung der Brennstoffzellenzuluft mit Feuchtigkeit ermöglicht.

Diese Aufgabe wird mit den Merkmalen von Anspruch 1 gelöst. Auf vorteilhafte Ausgestaltungen nehmen die Unteransprüche Bezug.

Der erfindungsgemäße Befeuchter für eine Brennstoffzelle umfasst ein Gehäuse mit einer ersten Eintrittsöffnung, einer zweiten Eintrittsöffnung, einer ersten Austrittsöffnung und einer zweiten Austrittsöffnung, wobei der zweiten Eintrittsöffnung ein Kanal zugeordnet ist, wobei zwischen dem Kanal und der zweiten Austrittsöffnung ein Membranelement angeordnet ist, wobei der Kanal mit einer dritten Austrittsöffnung strömungsleitend verbunden ist.

Die Befeuchterluft tritt über die zweite Eintrittsöffnung und den Kanal in den Befeuchter ein und kann dann wahlweise das Membranelement durchströmen und den Befeuchter über die zweite Austrittsöffnung verlassen oder direkt über die dritte Austrittsöffnung wieder aus dem Befeuchter ausströmen. Dadurch ist es möglich, nur einen Teilvolumenstrom der Befeuchterluft durch das Membranelement hindurch zu lenken und die Befeuchtung der Brennstoffzellenzuluft mit einfachen Mitteln zu modifizieren. Prinzipiell ist es dabei möglich, dass die Befeuchterluft auch über die erste Ausströmöffnung in den Befeuchter eingeleitet wird und den Befeuchter über die erste Einströmöffnung verlässt. Das Membranelement kann dementsprechend bidirektional durchströmt werden.

Der Kanal ist vorzugsweise rohrförmig und über die Umfangswand perforiert. Durch die rohrförmige Ausgestaltung ist der Kanal kostengünstig herstellbar und ermöglicht über den Umfang eine gleichmäßige Luftverteilung. Durch die Perforation der Umfangswand kann die Befeuchterluft, die stirnseitig in den Kanal eintritt, über den Umfang in radialer Richtung aus dem Kanal ausströmen, um das Membranelement zu durchdringen.

Für die Perforation können Bohrungen in die Umfangswand des Kanals eingebracht sein, die vorzugsweise gleichmäßig über den Umfang des Kanals verteilt sind. Alternativ kann die Umfangswand des Kanals siebförmig ausgebildet sein und eine Vielzahl von Durchbrechungen aufweisen. Ebenso können in Längsrichtung verlaufende Schlitze in den Kanal eingebracht sein. Die in den Kanal eingebrachte Perforation fungiert vorzugsweise als Diffusor und ermöglicht eine gleichmäßige Verteilung der in das Membranelement eindringenden Befeuchterluft.

Dabei können die Anzahl und der Querschnitt der Öffnungen über die Länge des Kanals variieren. Denkbar ist beispielsweise, dass sich die Anzahl und/oder der Querschnitt der Öffnungen in Richtung auf die dritte Austrittsöffnung verringern. Dadurch einem Druckverlust entgegengewirkt werden.

Die Membran kann Hohlfasern umfassen. Dabei durchströmt die zu befeuchtende Brennstoffzellenzuluft vorzugsweise das Innere der Hohlfasern, während die Befeuchterluft, beispielsweise die Brennstoffzellenabluft, die Hohlfasern außenseitig umströmt. Die Hohlfasern sind vorzugsweise in Längsrichtung des Kanals ausgerichtet und die Brennstoffzellenzuluft und die Befeuchterluft sind im Kreuzstrom oder im Kreuzgegenstrom geführt.

Die Hohlfasern können gleichmäßig über den Umfang verteilt angeordnet sein. Die Packungsdichte kann dabei in radialer Richtung betrachtet variieren. Je nach Anforderung und Ausgestaltung ist es dabei denkbar, dass die Packungsdichte nach radial außen zunimmt oder auch abnimmt. Die Hohlfasern können vereinzelt sein oder zu einem Bündel zusammengefasst sein. Beispielsweise können drei oder mehr Hohlfasern zu einem Bündel zusammengefasst sein, wobei die Membran mehrere Hohlfaserbündel umfasst. Die Bündel sind dabei vorzugsweise voneinander beabstandet, beispielsweise über Abstandshalter, um das Umströmen der Hohlfasern zu verbessern.

Die Hohlfasern sind vorzugsweise so ausgebildet, dass diese lediglich Feuchtigkeit, insbesondere Wasserdampf hindurchlassen, während ein Gasaustausch, insbesondere der von Sauerstoff unterbunden wird. Die Hohlfasern können im Bereich der Stirnseiten zur Ausbildung des Membranelementes miteinander verbunden sein. Vorzugsweise ist das Membranelement hohlzylindrisch ausgebildet und nimmt im Inneren den Kanal auf.

Der Kanal ist vorzugsweise an einer Stirnseite mit der zweiten Eintrittsöffnung strömungsleitend verbunden und an der anderen Stirnseite mit der dritten Austrittsöffnung. Die Befeuchterluft tritt über die zweite Eintrittsöffnung in den Kanal ein und kann den Kanal über die Umfangswand, die dritte Austrittsöffnung oder sowohl über die Umfangswand und die dritte Austrittsöffnung wieder verlassen. Der Weg von der ersten Eintrittsöffnung zur dritten Austrittsöffnung bildet dabei einen Bypass, die über die dritte Austrittsöffnung ausströmende Befeuchterluft verlässt hierbei den Befeuchter, ohne Feuchtigkeit an die Brennstoffzellenzuluft zu übertragen.

An die erste Austrittsöffnung kann sich ein weiterer Kanal und an die dritte Austrittsöffnung kann sich ein Bypasskanal anschließen. Vorzugsweise mündet der Bypasskanal in den weiteren Kanal. Der weitere Kanal und der Bypasskanal können außerhalb des Befeuchters oder innerhalb des Befeuchters geführt sein. Sind der Bypasskanal und der weitere Kanal außerhalb geführt, ist der Befeuchter kostengünstig herstellbar. Dies gilt insbesondere dann, wenn der Bypasskanal und der weitere Kanal materialeinheitlich und einstückig mit dem Gehäuse des Befeuchters ausgebildet sind. Des Weiteren kann die Strömungsführung besonders druckverlustarm ausgestaltet werden. Sind der Bypasskanal und der weitere Kanal innerhalb des Befeuchters geführt, kann der Befeuchter besonders kompakt ausgestaltet werden und der Bauraumbedarf sinkt.

Der Bypasskanal kann in den weiteren Kanal münden und in dem Bypasskanal kann eine Absperrarmatur angeordnet sein. Die Absperrarmatur ist dabei vorzugsweise so ausgerüstet, dass der Bypasskanal wahlweise geöffnet, teilweise geöffnet oder geschlossen sein kann. Dementsprechend ermöglicht die Absperrarmatur eine Beeinflussung der durch den Bypasskanal strömenden Befeuchterluft. Ist der Bypasskanal geschlossen, strömt die Befeuchterluft vollständig über die Umfangswand des Kanals in das Membranelement und schließlich aus der zweiten Austrittsöffnung heraus. Ist die Absperrarmatur geöffnet, strömt die Befeuchterluft aufgrund des deutlich geringeren Druckverlustes nahezu vollständig über die dritte Austrittsöffnung aus dem Befeuchter heraus, ohne das Membranelement zu durchströmen. Die Absperrarmatur kann vorzugsweise aber auch eine Mittelstellung einnehmen, so dass ein Teilvolumenstrom der Befeuchterluft über die Umfangswand des Kanals in das Membranelement einströmt und ein Teilvolumenstrom direkt über die dritte Austrittsöffnung ausströmt.

Die Absperrarmatur kann als Ventil oder als Klappe ausgebildet sein. Ventile oder Klappen sind kostengünstig herstellbar und ermöglichen eine einfache Beeinflussung der durch den Bypasskanal strömenden Befeuchterluft.

Dem Kanal kann zumindest ein Wasserabscheider zugeordnet sein. Während des Betriebs kann Wasserdampf aus der Befeuchterluft kondensieren und sich in dem Kanal ansammeln. Durch den Wasserabscheider können Wasseransammlungen aus dem Kanal herausgeführt werden.

Der Bypasskanal kann winklig an den Kanal angebunden sein. Bei dieser Ausgestaltung liegt vorzugsweise die Stirnseite des Kanals frei und die freiliegende Stirnseite kann durch ein Verschlusselement verschlossen werden. Das Verschlusselement ist vorzugsweise entnehmbar in dem Kanal befestigt, so dass der Kanal von außen zugänglich ist.

Der Wasserabscheider kann in das Verschlusselement integriert sein. Dabei kann das Verschlusselement Strömungselemente aufweisen, welche eine Erhöhung der Strömungsgeschwindigkeit des den Bypasskanal durchströmenden Fluids bewirken. Durch eine an die Verengung anschließende Querschnittserweiterung verlangsamt sich die Strömungsgeschwindigkeit wieder und in dem Luftstrom mitgeführte Wassertropfen werden abgeschieden und können durch eine Drainageleitung aus dem Bypasskanal herausgeführt werden.

Der Kanal und das Membranelement können eine vormontierte Einheit bilden, sodass der Befeuchter einfach und kostengünstig montierbar ist.

Der Kanal kann über Stutzen mit der ersten Eintrittsöffnung und der dritten Austrittsöffnung verbunden sein. Dabei kann die Verbindung von Stutzen und Einström- bzw. Austrittsöffnung über eine Steckverbindung erfolgen, sodass der Kanal schnell montierbar ist.

### Kurzbeschreibung der Zeichnung

Einige Ausgestaltungen des erfindungsgemäßen Befeuchters werden nachfolgend anhand der Figuren näher erläutert. Die Figuren zeigen, jeweils schematisch:
Fig. 1 einen Befeuchter im Schnitt;
Fig. 2 den Befeuchter in dreidimensionaler Ansicht;
Fig. 3 den Befeuchter mit geschlossenem Bypasskanal;
Fig. 4 den Befeuchter mit geöffnetem Bypasskanal;
Fig. 5 im Detail das Verschlusselement.

### Ausführung der Erfindung

Die Figuren zeigen einen Befeuchter 1 für eine Brennstoffzelle, umfassend ein Gehäuse 3 mit einer ersten Eintrittsöffnung 4, einer zweiten Eintrittsöffnung 5, einer ersten Austrittsöffnung 6 und einer zweiten Austrittsöffnung 7. Der zweiten Eintrittsöffnung 5 ist ein Kanal 8 zugeordnet und zwischen dem Kanal 8 und der zweiten Austrittsöffnung 7 ist ein Membranelement 9 angeordnet.

Der Befeuchter 1 dient der Befeuchtung von Brennstoffzellenzuluft. Für die Befeuchtung der Brennstoffzellenzuluft wird aus der Brennstoffzelle abgeführte Brennstoffzellenabluft herangezogen, die mit Feuchtigkeit in Form von Wasserdampf beladen ist. Die Brennstoffzellenabluft wird im Zusammenhang mit dem Befeuchter 1 auch als Befeuchterluft bezeichnet.

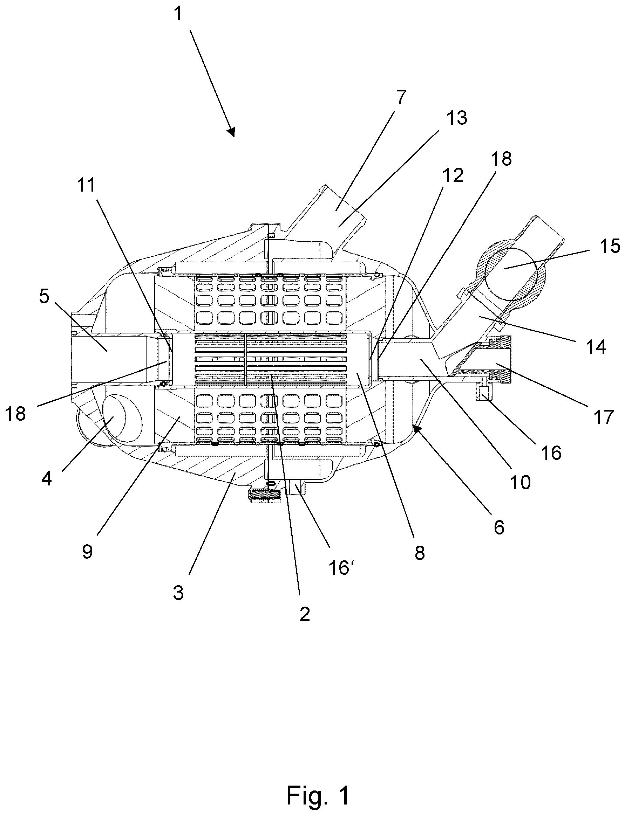

Figur 1 zeigt den Befeuchter 1 im Schnitt. Der Kanal 8 ist rohrförmig ausgebildet und entlang der Umfangswand 2 perforiert. Für die Perforation sind in die Umfangswand 2 in Längsrichtung verlaufende Schlitze eingebracht. Zwischen dem Kanal 8 und der zweiten Austrittsöffnung 7 ist ein Membranelement 9 angeordnet, wobei das Membranelement 9 den Kanal 8 konzentrisch umgibt. Das Membranelement 9 umfasst Hohlfasern, die sich in Längsrichtung des Kanals 8 erstrecken. Die Hohlfasern sind stirnseitig an beiden Seiten über eine Vergussmasse fest miteinander verbunden.

Der Kanal 8 ist mit einer dritten Austrittsöffnung 10 strömungsleitend verbunden. Der Kanal 8 ist ferner über Stutzen 18 mit der zweiten Eintrittsöffnung 5 und der dritten Austrittsöffnung 10 verbunden, die Verbindung ist jeweils eine Steckverbindung. Der Kanal 8 ist an einer Stirnseite 11 mit der zweiten Eintrittsöffnung 5 und an der anderen Stirnseite 12 mit der dritten Austrittsöffnung 10 verbunden. Der Kanal 8 und das Membranelement 9 bilden eine vormontierte Einheit.

Die zu befeuchtende Brennstoffzellenzuluft strömt über die erste Eintrittsöffnung 4 in den Befeuchter 1 und anschließend stirnseitig in die Hohlfasern des Membranelementes 9 ein und durchströmt die Hohlfasern innenseitig. Dabei kann die Brennstoffzellenzuluft die Hohlfasern auch in umgekehrter Richtung durchströmen. In diesem Fall strömt die Brennstoffzellenzuluft über die erste Austrittsöffnung 6 in den Befeuchter und stirnseitig in die Hohlfasern des Membranelementes 9 ein.

Die die Feuchtigkeit tragende Befeuchterluft, strömt über die zweite Eintrittsöffnung 5 in den Kanal 8 ein. Durch die in die Umfangswand 2 des Kanals 8 eingebrachte Perforation strömt die Befeuchterluft in radialer Richtung durch die Umfangswand 2 und durchströmt das Membranelement 9 in radialer Richtung. Dabei strömt die Befeuchterluft außenseitig an den Hohlfasern entlang. Das Membranelement 9 wird im Kreuzgegenstromprinzip umströmt. Die Umfangswand 2 der Hohlfasern ist als semipermeable Membran ausgebildet und ausgerüstet, nur Feuchtigkeit in Form von Wasserdampf zu übertragen und einen Austausch weiterer Gase, insbesondere den Austausch von Sauerstoff zu unterbinden.

An die zweite Austrittsöffnung 7 schließt sich ein weiterer Kanal 13 an und an die dritte Austrittsöffnung 10 schließt sich ein Bypasskanal 14 an. Der Bypasskanal 14 mündet in den weiteren Kanal 13 und in dem Bypasskanal 14 ist eine Absperrarmatur 15 in Form einer Klappe angeordnet. Gemäß einer alternativen Ausgestaltung ist die Absperrarmatur 15 als Ventil ausgebildet, ebenso denkbar ist, dass die Absperrarmatur 15 als Hahn ausgebildet ist.

Der Bypasskanal 14 ist über einen Abzweig an den Kanal 8 angebunden, wobei der Bypasskanal 14 durch den Abzweig winklig an den Kanal 8 angebunden ist. Die Stirnseite des Kanals 8 ist durch ein Verschlusselement 17 verschlossen. Das Verschlusselement 17 ist in die Stirnseite des Kanals 8 eingesteckt und wird über Dichtelemente kraftschlüssig in dem Kanal 8 gehalten. Das Gehäuse 3 des Befeuchters 1 weist bodenseitig einen Wasserabscheider 16' auf, durch den Wasser abgeschieden werden kann, welches sich aus der Brennstoffzellenzuluft abscheidet. Ein weiterer Wasserabscheider 16 ist dem Kanal 8 zugeordnet. Der dem Kanal 8 zugeordnete weitere Wasserabscheider 16 ist in das Verschlusselement 17 integriert.

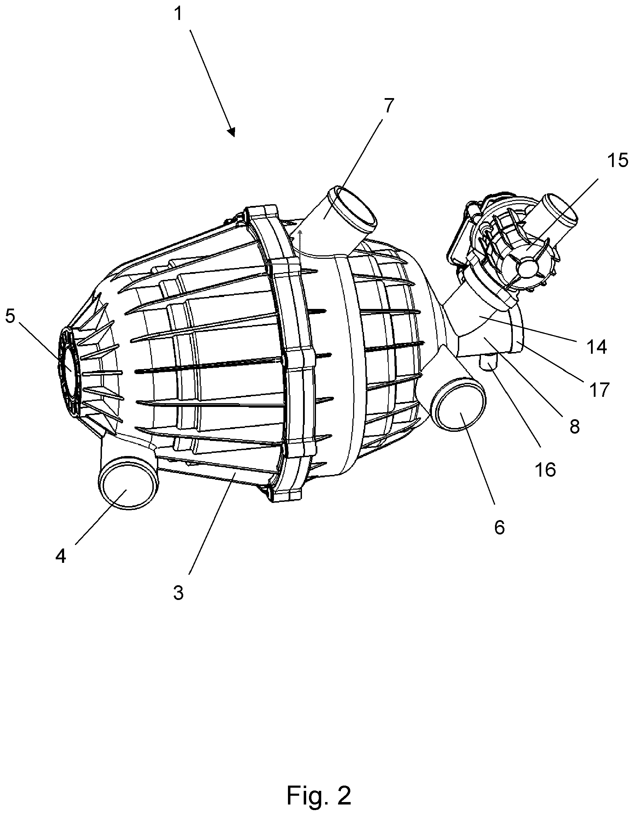

Figur 2 zeigt den Befeuchter 1 gemäß Figur 1 in der perspektivischen, seitlichen Ansicht. In dieser Darstellung sind insbesondere die erste Eintrittsöffnung 4 und die erste Austrittsöffnung 6 zu erkennen, die bei der Schnittansicht in Figur 1 außerhalb der Schnittebene liegen. Die erste Eintrittsöffnung 4 und die erste Austrittsöffnung 6 sind bidirektional durchströmbar. Das bedeutet, dass je nach Anforderung die Befeuchterluft auch über die erste Austrittsöffnung 6 in den Befeuchter einströmen und über die erste Eintrittsöffnung 4 den Befeuchter verlassen kann.

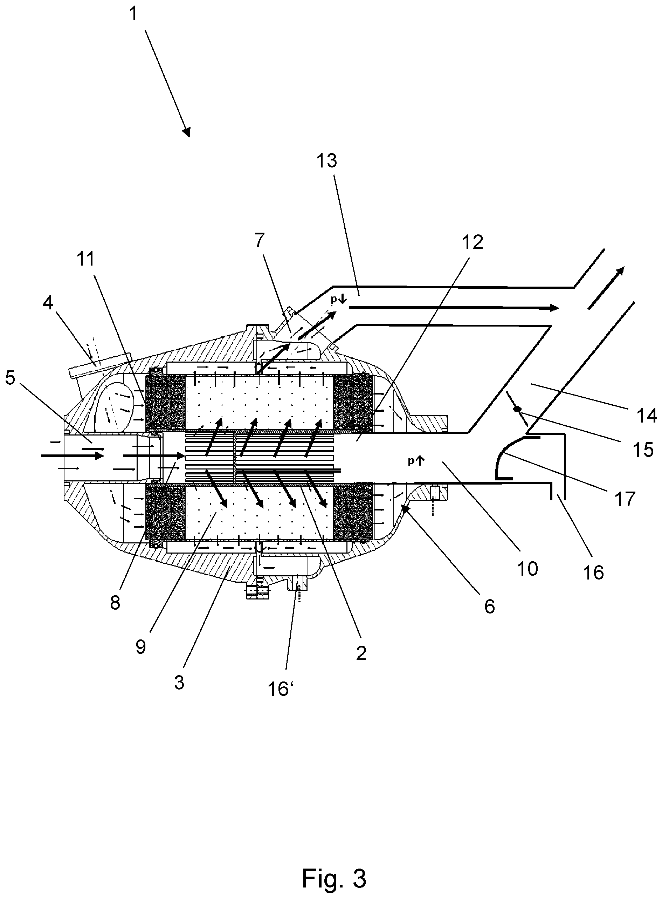

Figur 3 zeigt den Befeuchter 1 gemäß Figur 1, wobei die Absperrarmatur 15 verschlossen ist. Bei dieser Ausgestaltung strömt die gesamte über die zweite Eintrittsöffnung 5 einströmende Befeuchterluft durch das Membranelement 9 hindurch und über die zweite Austrittsöffnung 7 aus dem Befeuchter 1 heraus.

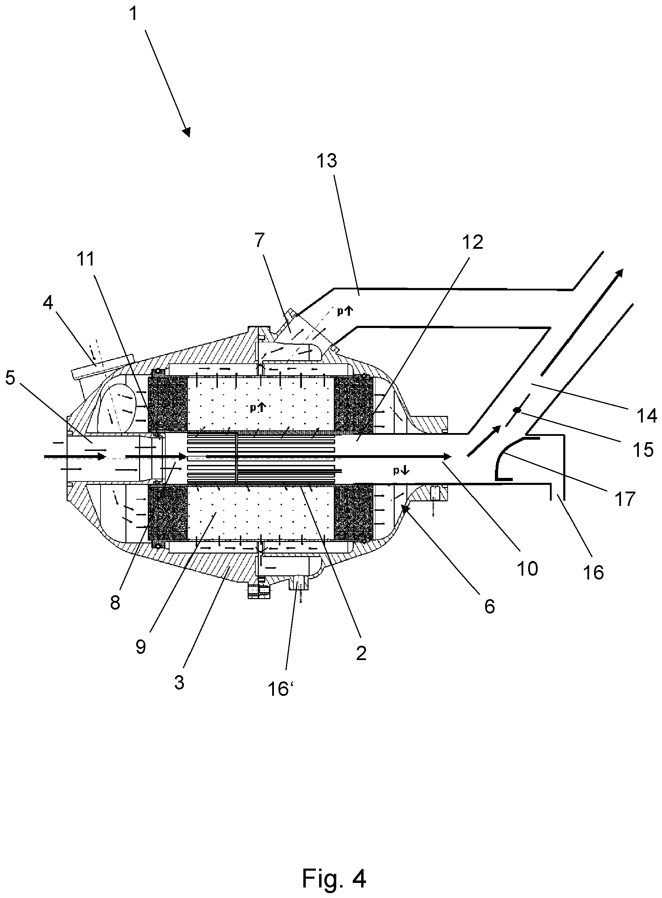

Bei der Ausgestaltung gemäß Figur 4 ist die Absperrarmatur 15 geöffnet und die über die zweite Eintrittsöffnung 5 einströmende Befeuchterluft strömt nahezu vollständig über die dritte Austrittsöffnung 10 heraus, ohne dabei das Membranelement 9 zu passieren.

Die Absperrarmatur 15 kann aber ebenso auch Zwischenstellungen einnehmen, sodass ein erstes Teilvolumen der über die zweite Eintrittsöffnung 5 einströmenden Befeuchterluft das Membranelement 9 durchströmt und über die zweite Austrittsöffnung 7 ausströmt und ein zweites Teilvolumen der Befeuchterluft direkt über die dritte Austrittsöffnung 10 ausströmt.

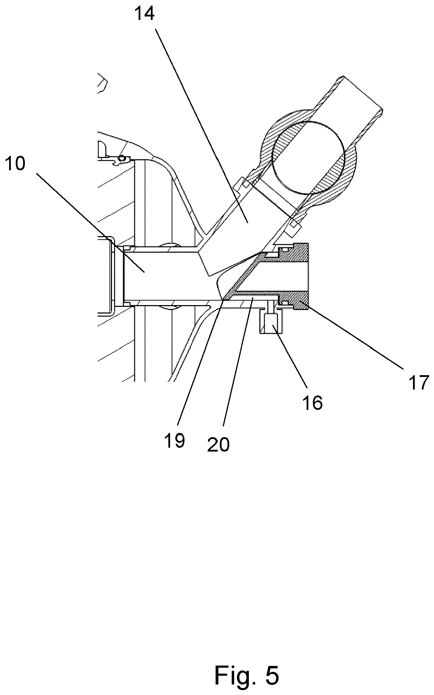

Figur 5 zeigt im Detail das in den Kanal 8 eingesetzte Verschlusselement 17. Auf der dem Kanal 8 zugewandten Seite weist das Verschlusselement 17 einen umlaufenden Spalt 19 auf, der eine Querschnittsverengung bildet. In diesem Bereich steigt die Strömungsgeschwindigkeit der Befeuchterluft stark an. An die Querschnittsverengung schließt sich eine Querschnittserweiterung 20 an, an welcher die Strömungsgeschwindigkeit der Befeuchterluft stark sinkt und sich in der Befeuchterluft mitgeführtes Wasser abscheidet. Das abgeschiedene Wasser kann durch den Wasserabscheider 16 aus dem Kanal 8 abgeführt werden. Das Verschlusselement 17 ist als Stopfen ausgebildet.

## Patentansprüche

1. Befeuchter (1) für eine Brennstoffzelle, umfassend ein Gehäuse (3) mit einer ersten Eintrittsöffnung (4), einer zweiten Eintrittsöffnung (5), einer ersten Austrittsöffnung (6) und einer zweiten Austrittsöffnung (7), wobei der zweiten Eintrittsöffnung (5) ein Kanal (8) zugeordnet ist, wobei zwischen dem Kanal (8) und der zweiten Austrittsöffnung (7) ein Membranelement (9) angeordnet ist, **dadurch gekennzeichnet, dass** der Kanal (8) mit einer dritten Austrittsöffnung (10) strömungsleitend verbunden ist.

2. Befeuchter nach Anspruch 1, **dadurch gekennzeichnet, dass** der Kanal (8) rohrförmig ausgebildet und entlang der Umfangswand (2) perforiert ist.

3. Befeuchter nach Anspruch 1 oder 2, **dadurch gekennzeichnet, dass** das Membranelement (9) den Kanal (8) konzentrisch umgibt.

4. Befeuchter nach einem der Ansprüche 1 bis 3, **dadurch gekennzeichnet, dass** das Membranelement (9) Hohlfasern umfasst.

5. Befeuchter nach einem der Ansprüche 1 bis 4, **dadurch gekennzeichnet, dass** der Kanal (8) an einer Stirnseite (11) mit der zweiten Eintrittsöffnung (5) und an der anderen Stirnseite (12) mit der dritten Austrittsöffnung (10) verbunden ist.

6. Befeuchter nach einem der Ansprüche 1 bis 5, **dadurch gekennzeichnet, dass** sich an die zweite Austrittsöffnung (7) ein weiterer Kanal (13) und an die dritte Austrittsöffnung (10) ein Bypasskanal (14) anschließt.

7. Befeuchter nach Anspruch 6, **dadurch gekennzeichnet, dass** der Bypasskanal (14) in den weiteren Kanal (13) mündet.

8. Befeuchter nach Anspruch 6 oder 7, **dadurch gekennzeichnet, dass** in dem Bypasskanal (14) eine Absperrarmatur (15) angeordnet ist.

9. Befeuchter nach Anspruch 8, **dadurch gekennzeichnet, dass** die Absperrarmatur (15) als Ventil oder als Klappe ausgebildet ist.

10. Befeuchter nach einem der Ansprüche 1 bis 9, **dadurch gekennzeichnet, dass** dem Kanal (8) zumindest ein Wasserabscheider (16) zugeordnet ist.

11. Befeuchter nach einem der Ansprüche 6 bis 10, **dadurch gekennzeichnet, dass** der Bypasskanal (14) winklig an den Kanal (8) angebunden ist.

12. Befeuchter nach Anspruch 11, **dadurch gekennzeichnet, dass** die Stirnseite des Kanals (8) durch ein Verschlusselement (17) verschlossen ist.

13. Befeuchter nach Anspruch 12, **dadurch gekennzeichnet, dass** der Wasserabscheider (16) in das Verschlusselement (17) integriert ist.

14. Befeuchter nach einem der Ansprüche 1 bis 13, **dadurch gekennzeichnet, dass** der Kanal (8) und das Membranelement (9) eine vormontierte Einheit bilden.

15. Befeuchter nach einem der Ansprüche 1 bis 14, **dadurch gekennzeichnet, dass** der Kanal (8) über Stutzen (18) mit der zweiten Eintrittsöffnung (5) und der dritten Austrittsöffnung (10) verbunden ist.
